# EUROPEAN PATENT SPECIFICATION

(11) **EP 4 324 730 B1**
(45) Date of publication and mention of the grant of the patent: **06.05.2026**
(21) Application number: 23181198.5
(22) Date of filing: 23.06.2023
(51) Int. Cl.: B62J 43/16, B62J 37/00, B62J 6/04

(54) **REAR STRUCTURE OF STRADDLE-TYPE VEHICLE**
HINTERE STRUKTUR EINES GRÄTSCHSITZFAHRZEUGS
STRUCTURE ARRIÈRE DE VÉHICULE DE TYPE À ENFOURCHER

(30) Priority: 15.08.2022 JP 2022129236
(43) Date of publication of application: 21.02.2024
(73) Proprietor: Suzuki Motor Corporation, Hamamatsu-shi, Shizuoka 432-8611 (JP)
(72) Inventor: KAMBAYASHI, Takahiro, 432-8611 Hamamatsu-shi (JP)
(74) Representative: Haseltine Lake Kempner LLP

(56) References cited:
- WO-A1-2022/091110
- GB-A- 2 553 380
- US-A- 5 421 427
- US-A1- 2012 103 710
- US-B2- 8 668 037

## Description

### TECHNICAL FIELD

The present disclosure relates to a rear structure of a straddle-type vehicle.

### BACKGROUND ART

In a scooter-type straddle-type vehicle or the like, a fuel tank is often laid out inside a seat frame cover at a rear portion of the vehicle. As a straddle-type vehicle of this type, a vehicle in which a fuel supply port of a fuel tank is positioned behind a seat is known (for example, see JPH02-155884A). In the straddle-type vehicle described in JPH02-155884A, a housing space for the fuel tank is ensured behind the seat, and the fuel supply port can be accessed by opening an opening and closing cover covering an upper surface of the housing space. In order to access the housing space from the rear, a configuration is also proposed in which the rear of the housing space is covered with the opening and closing cover, and a lighting device is disposed below the opening and closing cover.

In order to ensure visibility of the lighting device, it is desirable to dispose the lighting device at a high position. In a case where the lighting device is disposed below the opening and closing cover as described above, the visibility of the lighting device deteriorates. In addition, since the lighting device is positioned below the fuel supply port, there is a possibility that the fuel spilled from the fuel supply port adheres to the lighting device and a lens deteriorates. In order to prevent the deterioration of the lens, it is necessary to select a material having high resistance to the fuel or to add a protective member, and there is a problem that the cost increases.

In US 8,668,037 B2, an electrically operated vehicle is disclosed including a motor that drives the rear wheels, a battery that is arranged above the motor, and a lower battery that is placed between the right and left rear wheels. The lower battery and motor are arranged in a distributed manner over an axle of the rear wheels between a vehicle front side of the axle of the rear wheels and a vehicle rear side of the axle of the rear wheels. An upper end portion of a rear cushion is supported on a vehicle body frame, and the battery and the motor are supported on a lower end of the rear cushion.

### SUMMARY OF INVENTION

An object of the present disclosure is to provide a rear structure of a straddle-type vehicle capable of improving user convenience with a simple structure.

The scope of the present invention is defined by the appended claims.

According to the rear structure of a straddle-type vehicle of one aspect of the present disclosure, even in a case where the fuel tank or a battery is disposed below the seat, the lighting device is positioned above or on a side of the concave housing, and the visibility of the lighting device does not deteriorate. In addition, in a case where the fuel tank is disposed below the seat, the lighting device is not positioned below the filler port of the fuel tank. Therefore, the fuel is less likely to adhere to the lighting device, and it is not necessary to select a material having high resistance to the fuel as the material of the lighting device or to add a member for protecting the lighting device from the fuel. Accordingly, it is possible to improve user convenience with a simple structure.

### BRIEF DESCRIPTION OF DRAWINGS

FIG. 1 is a left side view of a straddle-type vehicle according to a first embodiment.
FIG. 2 is a schematic rear view of a rear structure of the straddle-type vehicle according to the first embodiment.
FIG. 3 is a schematic cross-sectional view of the rear structure of FIG. 2 taken along a line A-A.
FIG. 4 is a schematic cross-sectional view of a rear structure of a straddle-type vehicle according to a second embodiment.
FIG. 5 is a schematic rear view of a rear structure of a straddle-type vehicle according to a modification.

### DESCRIPTION OF EMBODIMENTS

A fuel tank or a battery is disposed at a rear portion of a straddle-type vehicle according to an aspect of the present disclosure. A vehicle rear side is illuminated by a lighting device on a rear side of the fuel tank or the battery. A filler port of the fuel tank or a charging port of the battery is surrounded by a concave housing. Since the lighting device is positioned above or on a side of the concave housing, the visibility of the lighting device does not deteriorate even in a case where the fuel tank or the battery is disposed below a seat. In addition, in a case where the fuel tank is disposed below the seat, the lighting device is not positioned below the filler port of the fuel tank. Therefore, the fuel is less likely to adhere to the lighting device, and it is not necessary to select a material having high resistance to the fuel as the material of the lighting device or to add a member for protecting the lighting device from the fuel. Accordingly, it is possible to improve user convenience with a simple structure.

### [Embodiment]

### <First Embodiment>

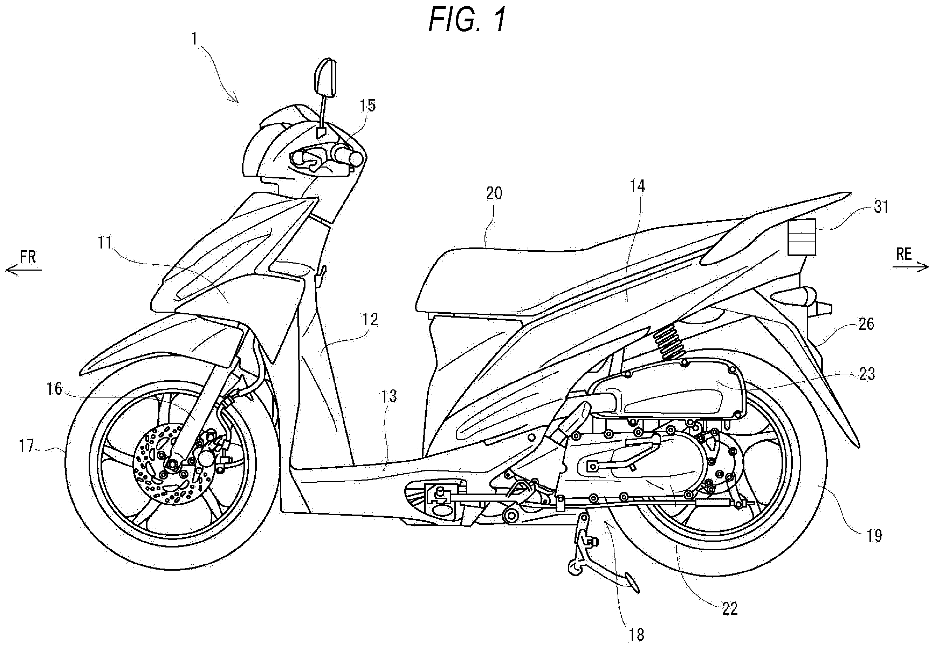

Hereinafter, a straddle-type vehicle according to a first embodiment will be described with reference to the accompanying drawings. FIG. 1 is a left side view of the straddle-type vehicle according to the first embodiment. In the following drawings, an arrow FR indicates a vehicle front side, an arrow RE indicates a vehicle rear side, an arrow L indicates a vehicle left side, and an arrow R indicates a vehicle right side.

As shown in FIG. 1, a straddle-type vehicle 1 of a scooter type is formed by mounting various covers, as a vehicle body exterior, on an underbone type vehicle body frame that is not shown. A front frame cover 11 is provided in the vehicle front side. A front leg shield 12 for protecting the foot of a rider is provided in a rear side of the front frame cover 11. A foot board 13 extends rearward from a lower end of the front leg shield 12. A seat frame cover 14 is provided behind the foot board 13. A foot rest space for the rider is formed in front of a seat 20 by the front leg shield 12 and the foot board 13.

A handle 15 is provided in an upper side of the front frame cover 11. A front wheel 17 is rotatably supported on a lower side of the front frame cover 11 via a pair of front forks 16. The seat 20 is provided above the seat frame cover 14. A unit swing type engine 18 is provided below the seat frame cover 14. The engine 18 is swingably connected to the vehicle body frame. A rear wheel 19 is rotatably supported by a rear portion of the engine 18. A left side surface of a crankcase of the engine 18 is covered with a CVT cover 22. An air cleaner 23 is provided above the CVT cover 22.

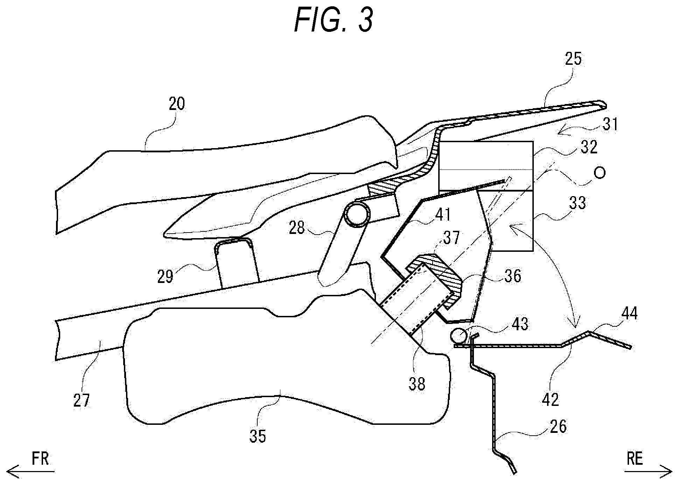

A fuel tank 35 (see FIG. 3) is disposed inside of the seat frame cover 14. In such a layout, a fuel supply port of the fuel tank 35 may be positioned at the rear portion of the vehicle. In a case where a lamp unit 31 at the rear portion of the vehicle is positioned below the fuel supply port of the fuel tank 35, it is difficult to ensure sufficient visibility. In addition, in a case where fuel dripping from the fuel supply port of the fuel tank 35 adheres to a lens of the lamp unit 31, the lens may deteriorate and needs to be replaced. In order to prevent deterioration of the lens, it is necessary to use an oil-resistant material or to add a component for protecting the lens from the fuel.

Optional parts such as a rear carrier, a top case, and a grab bar may be disposed at a rear portion of the vehicle. In a case where the fuel supply port of the fuel tank 35 is positioned above the lamp unit 31, it is necessary to release the optional parts upward to ensure a work space for a fuel supply work. For example, in a case where a top surface of the rear carrier or the top case is positioned high, a center of gravity of the rear portion of the vehicle becomes high, operability decreases, and it becomes difficult to load a load. Therefore, in the present embodiment, since the fuel supply port of the fuel tank 35 is positioned below the lamp unit 31, it is possible to prevent the height of the optional parts at the rear portion of the vehicle from being high while ensuring the visibility of the lamp unit 31.

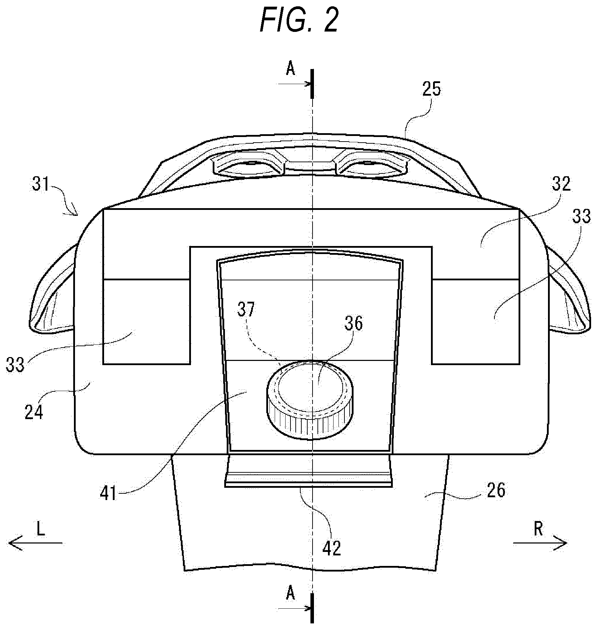

A rear structure of the straddle-type vehicle will be described with reference to FIGs. 2 and 3. FIG. 2 is a schematic rear view of the rear structure of the straddle-type vehicle according to the first embodiment. FIG. 3 is a schematic cross-sectional view of the rear structure of FIG. 2 taken along a line A-A.

As shown in FIG. 2, a lamp unit (lighting device) 31 is exposed from a tail cover 24 at the rear portion of the vehicle. An upper half portion of the lamp unit 31, which is long in a vehicle width direction, is a brake lamp 32. Lower half portions of the lamp unit 31, which are separated in the vehicle width direction, are a pair of left and right turn signal lamps 33. The brake lamp 32 is configured to be turned on in a case where the vehicle is decelerated. The pair of left and right turn signal lamps 33 are configured to be turned on in a case where the vehicle changes its course or turns left or right. A rear carrier 25 is positioned above the lamp unit 31 as an optional part. A load is placed on a top surface of the rear carrier 25 without blocking the light of the lamp unit 31.

A concave housing 41 is provided between the pair of left and right turn signal lamps 33. A rear surface of the concave housing 41 has an opening. The inside of the concave housing 41 is exposed to the outside through the opening. A fuel supply cap 36 of the fuel tank 35 protrudes from an inner bottom surface of the concave housing 41, The fuel supply port (filler port) 37 of the fuel tank 35 is exposed to the outside by removing the fuel supply cap 36. An opening and closing cover 42 is provided below the opening of the concave housing 41. The opening and closing cover 42 is formed in a design having a sense of unity with the tail cover 24. By closing the opening and closing cover 42, exposure of the fuel supply cap 36 is prevented, and design is improved.

The lamp unit 31 is formed in a concave shape, in a rear view. The concave housing 41 except for a lower part is surrounded by the lamp unit 31. More specifically, the brake lamp 32 except for both end parts in the vehicle width direction is recessed upward. The turn signal lamps 33 are connected to lower sides of both end parts, in the vehicle width direction, of the brake lamp 32. That is, the brake lamp 32 (lamp unit 31) is formed to avoid an upper portion of the concave housing 41. As described above, the brake lamp 32 is disposed on the tail cover 24 by effectively utilizing a narrow space above the concave housing 41.

As shown in FIG. 3, a pair of left and right seat frames 27 extend in a front-rear direction, inside the rear portion of the vehicle. Rear end portions of the pair of left and right seat frames 27 are connected by a bridge 28. The seat 20 is supported from below by the bridge 28. A bracket 29 is provided in front of the bridge 28 of the pair of left and right seat frames 27. The rear carrier 25 is attached to the bracket 29 and the bridge 28. A space to dispose the fuel tank 35 is formed between the pair of left and right seat frames 27, below the seat 20. A rear surface of the space is covered with the concave housing 41.

The fuel tank 35 is disposed in the space at the rear portion of the vehicle. A fuel supply pipe 38 extends from a rear portion of the fuel tank 35 toward the concave housing 41. The fuel supply pipe 38 of the fuel tank 35 protrudes rearward from the concave housing 41. The fuel supply cap 36 is detachably attached to a distal end of the fuel supply pipe 38. The fuel supply port 37 of the fuel supply pipe 38 is directed obliquely upward to the rear. Thus, a fuel supply nozzle is easily inserted into the fuel supply port 37, thereby improving the workability of the fuel supply work or filling work. The concave housing 41 is recessed toward an inner side (front side) of the vehicle body. The fuel supply port 37 attached to the fuel supply cap 36 is surrounded by the concave housing 41.

The opening and closing cover 42 is provided below the concave housing 41. The fuel supply port 37 attached to the fuel supply cap 36 is configured to be covered and uncovered by the opening and closing cover 42. A swing shaft 43 of the opening and closing cover 42 is provided along a lower edge of the opening of the concave housing 41. Thus, the swing shaft 43 is inconspicuous by an upper end portion of a rear fender 26, thereby improving the design of the rear portion of the vehicle. The opening and closing cover 42 is connected to a lower portion of the concave housing 41 to be open downward around the swing shaft 43. The opening and closing cover 42 is configured to be swung in an upper-lower direction to take an upright posture in which the opening and closing cover 42 covers the concave housing 41 and a horizontal posture in which the opening and closing cover 42 uncovers the concave housing 41.

In the state where the opening and closing cover 42 is closed, the opening and closing cover 42 is locked in the upright posture by a lock mechanism that is not shown. As indicated by a two-dot chain line, the opening and closing cover 42 is inclined rearward from the swing shaft 43 toward an upper side, in a side view. Thus, water droplets and sand dust are less likely to enter the inside of the concave housing 41 from above due to the inclination of the opening and closing cover 42. In a state where the opening and closing cover 42 is opened, the opening and closing cover 42 is maintained in the horizontal posture by a stopper that is not shown. A gentle step 44 is provided in a distal end side of the opening and closing cover 42. A place to put a cap of the fuel supply port 37 is formed on an inner surface of the opening and closing cover 42. The use of the inner surface of the opening and closing cover 42 as the space improves the workability of the fuel supply work.

In the state where the opening and closing cover 42 is closed, the opening and closing cover 42 is inclined upward and rearward. Thus, in a case where the opening and closing cover 42 is unlocked, the opening and closing cover 42 is tilted rearward around the swing shaft 43, and the opening and closing cover 42 is automatically opened downward by its own weight. Therefore, the opening and closing cover 42 can be automatically opened without using a spring or the like having a long stroke. In addition, in the state where the opening and closing cover 42 is opened, a sufficient angle between a center line O of the fuel supply port 37 and the opening and closing cover 42 is formed. Therefore, in a case where the fuel supply nozzle is inserted into the fuel supply port 37, the opening and closing cover 42 does not interfere with the fuel supply nozzle.

The lamp unit 31 is configured to illuminate the rear of the vehicle behind the fuel tank 35. The brake lamp 32 is positioned above the concave housing 41. The turn signal lamps 33 are positioned on sides of the concave housing 41. Even in a layout in which the lamp unit 31 is positioned high and the fuel supply port 37 (the fuel supply cap 36) is disposed at the rear of the vehicle, visibility of the lamp unit 31 does not deteriorate. The brake lamp 32 is positioned above the fuel supply port 37 of the fuel tank 35. Thus, the fuel dripping from the fuel supply port 37 during the fuel supply work is less likely to adhere to lens or the like of the brake lamp 32.

In a side view, the opening and closing cover 42 is disposed on a vehicle front side of the brake lamp 32. Since the rear surface of the brake lamp 32 protrudes rearward than the rear edge of the concave housing 41 and the opening and closing cover 42, the brake lamp 32 serves as an eaves and water droplets and sand dust are less likely to enter the inside of the concave housing 41 from above. In addition, the lamp unit 31 overlaps the concave housing 41, in a side view. More specifically, a part of the brake lamp 32 and the turn signal lamps 33 overlap the concave housing 41 in the upper-lower direction and the front-rear direction. Thus, the lamp unit 31 and the concave housing 41 can be compactly disposed.

A top surface of the rear carrier 25 is positioned above the lamp unit 31. Since the top surface of the rear carrier 25 is separated upward from the fuel supply port 37 of the fuel tank 35, a sufficient work space is ensured at the rear of the vehicle, and the fuel supply work by the fuel supply nozzle is not hindered by the rear carrier 25. Further, since the lamp unit 31 (brake lamps 32) is interposed between the top surface of the rear carrier 25 and the opening and closing cover 42, the opening and closing cover 42 does not interfere with the rear carrier 25 even in a case where the top surface of the rear carrier 25 is lowered. Since the top surface of the rear carrier 25 is lowered, it is easy to load a load, and a center of gravity is lowered to improve operability.

As described above, according to the rear structure of the straddle-type vehicle 1 of the first embodiment, even in a case where the fuel tank 35 is disposed below the seat, the lamp unit 31 is positioned above or on the sides of the concave housing 41, and the visibility of the lamp unit 31 does not deteriorate. In addition, since the lamp unit 31 is not positioned below the fuel supply port 37 of the fuel tank 35, the fuel is less likely to adhere to the lamp unit 31. It is not necessary to select a material having high resistance to fuel as the material of the lamp unit 31 or to add a member for protecting the lamp unit 31 from the fuel. Accordingly, it is possible to improve user convenience with a simple structure.

### <Second Embodiment>

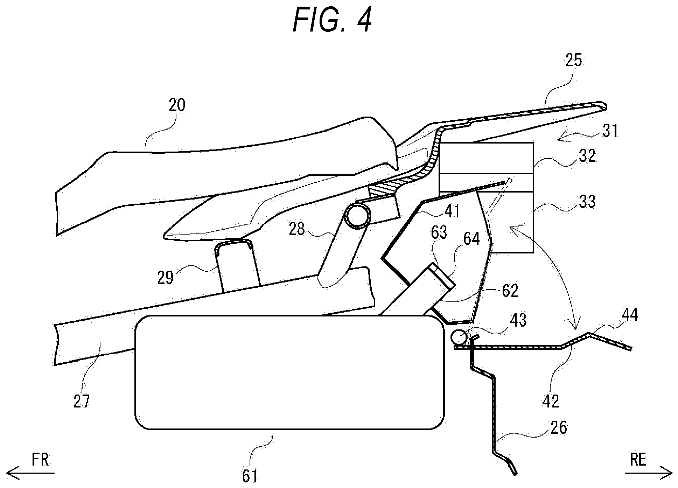

Next, a rear structure of a straddle-type vehicle according to a second embodiment will be described with reference to FIG. 4. The rear structure of a straddle-type vehicle according to the second embodiment is different from the rear structure of a straddle-type vehicle according to the first embodiment in that a battery is disposed instead of the fuel tank. In the second embodiment, the same configuration as that of the first embodiment will not be described. The same components as those of the first embodiment are denoted by the same reference numerals. FIG. 4 is a schematic cross-sectional view of the rear structure of a straddle-type vehicle according to the second embodiment.

As shown in FIG. 4, a space to dispose a battery 61 is formed between the pair of left and right seat frames 27 below the seat 20. A rear surface of the space is covered with the concave housing 41. The battery 61 is disposed in the space at the rear portion of the vehicle. A battery cable 62 extends from a rear portion of the battery 61 toward the concave housing 41. A charging port 63 at a distal end of the battery cable 62 protrudes rearward from the concave housing 41. A waterproof cap 64 is detachably attached to the charging port 63. The charging port 63 is directed obliquely upward to the rear. Thus, a charging nozzle is easily attached to the charging port 63, thereby improving the workability of a charging work.

The charging port 63 is surrounded by the concave housing 41. The charging port 63 is configured to be covered and uncovered by the opening and closing cover 42. In the state where the opening and closing cover 42 is closed, the opening and closing cover 42 is locked in the upright posture by a lock mechanism that is not shown. In a state where the opening and closing cover 42 is opened, the opening and closing cover 42 is maintained in the horizontal posture by a stopper that is not shown. Since the opening and closing cover 42 is inclined upward and rearward, in a case where the opening and closing cover 42 is unlocked, the opening and closing cover 42 is tilted rearward around the swing shaft 43, and the opening and closing cover 42 is automatically opened downward by its own weight.

In the second embodiment, the lamp unit 31 is positioned high in consideration of the visibility. In a side view, the opening and closing cover 42 is disposed on the vehicle front side of the brake lamp 32, and water droplets and sand dust are less likely to enter the inside of the concave housing 41. The lamp unit 31 is compactly disposed to overlap the concave housing 41, in a side view. Further, the top surface of the rear carrier 25 is separated upward from the charging port 63 of the battery 61, and a work space for the charging work is sufficiently ensured. Note that the battery 61 may be disposed at the rear portion of the vehicle.

As described above, even in the configuration in which the battery 61 is disposed below the seat instead of the fuel tank 35 as in the second embodiment, the lamp unit 31 is positioned above or on the sides of the concave housing 41, and the visibility of the lamp unit 31 does not deteriorate. Accordingly, it is possible to improve user convenience with a simple structure.

### <Modification>

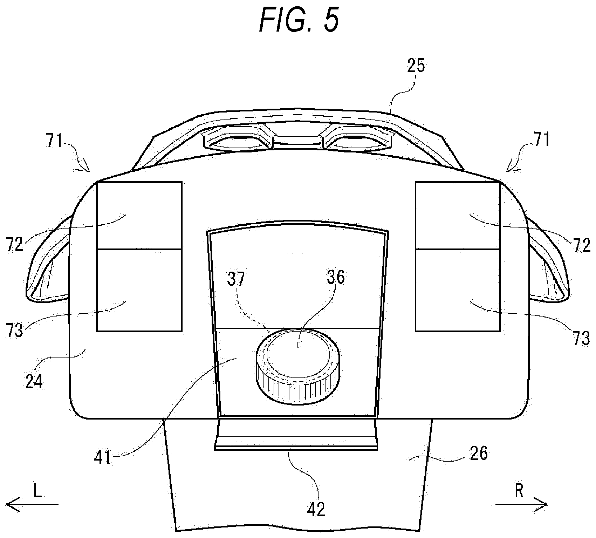

In the above embodiment, the configuration in which a single lamp unit is provided at the rear portion of the vehicle has been described, but the lamp unit may be separated to the left and right. For example, as shown in FIG. 5, a pair of left and right lamp units 71 separated in the vehicle width direction are exposed from the tail cover 24. An upper half portion of each lamp unit 71 is a brake lamp 72. A lower half portion of each lamp unit 71 is a turn signal lamp 73. The concave housing 41 is positioned between the pair of lamp units 71. Thus, the concave housing 41 and the pair of lamp units 71 can be more compactly disposed.

In each of the above embodiments, the opening and closing cover is inclined upward and rearward in the state where the opening and closing cover is closed, but the opening and closing cover may be in a vertical posture without being inclined in the state where the opening and closing cover is closed.

In the first embodiment described above, the tank to which the fuel oil is supplied is illustrated as an example of the fuel tank, but the fuel tank may be a tank filled with other fuel such as hydrogen.

In each of the above embodiments, the brake lamp and the turn signal lamp are combined to form the lamp unit, but other lamps may be combined to form the lamp unit. In addition, the lamp unit may be implemented by a single lamp.

In each of the embodiments described above, the rear carrier is illustrated as an example of an optional part, but the optional part may be any part as long as it is disposed in the rear part of the vehicle, and may be, for example, a top case or a glove bar.

In addition, the straddle-type vehicle is not limited to a general vehicle in which a driver rides on a seat in a posture straddling the seat, and includes a scooter-type vehicle in which the driver rides on the seat without straddling the seat.

As described above, according to a first aspect, there is provided a rear structure of a straddle-type vehicle (1) in which a fuel tank (35) or a battery (61) is disposed below a seat, and the rear structure of a straddle-type vehicle includes a lighting device (lamp unit 31) configured to illuminate a vehicle rear side, behind the fuel tank or the battery, and a concave housing (41) surrounding a filler port (fuel supply port 37) of the fuel tank or a charging port (63) of the battery. The lighting device is positioned at least one of above the concave housing and on a side of the concave housing. According to this configuration, even in a case where the fuel tank or the battery is disposed below the seat, the lighting device is positioned above or the side of the concave housing and the visibility of the lighting device does not deteriorate. In addition, in a case where the fuel tank is disposed below the seat, the lighting device is not positioned below the filler port of the fuel tank. Therefore, the fuel is less likely to adhere to the lighting device, and it is not necessary to select a material having high resistance to the fuel as the material of the lighting device or to add a member for protecting the lighting device from the fuel. Accordingly, it is possible to improve user convenience with a simple structure.

According to a second aspect, an optional part (rear carrier 25) is positioned above the lighting device. According to this configuration, since the optional part is separated upward from the filler port of the fuel tank or the charging port of the battery, a filling work of the filler port by a filling nozzle and a charging work of the charging port by a charging nozzle are not hindered by the optional part.

According to a third aspect, in a side view, at least a part of the lighting device overlaps the concave housing. According to this configuration, the concave housing and the lighting device can be compactly disposed.

According to a fourth aspect, the filler port of the fuel tank or the charging port of the battery is directed obliquely upward to the rear. According to this configuration, workability of filling the filler port with the filling nozzle and charging the charging port with the charging nozzle is improved.

According to a fifth aspect, the lighting device is a pair of lighting devices (lamp units 71) separated in a vehicle width direction, and the concave housing is positioned between the pair of lighting devices. According to this configuration, the concave housing and the pair of lighting devices can be more compactly disposed.

According to a sixth aspect, the rear structure of a straddle-type vehicle further includes an opening and closing cover (42) configured to be opened and closed to uncover and cover the filler port of the fuel tank or the charging port of the battery, the opening and closing cover is configured to be opened and closed rearward, and, in a side view, the opening and closing cover is disposed on a vehicle front side of the lighting device. According to this configuration, the lighting device serves as an eaves, and water droplets and sand dust are less likely to enter the inside of the concave housing from above.

According to the invention, in a rear view, the lighting device is formed in a concave shape, and the concave housing except for a lower part is surrounded by the lighting device. According to this configuration, the lighting device can be installed using a narrow space above the concave housing.

Although the present embodiments have been described, other embodiments may be used in which the above embodiments and modification are combined entirely or partially.

In addition, the technology of the present invention is not limited to the above embodiments, and may be variously changed, replaced, or modified. Further, as long as the technical concept can be realized in another way by the progress of the technique or another derivative technique, the present invention may be implemented using the method.

## Claims

1. A rear structure of a straddle-type vehicle (1) in which a fuel tank (35) or a battery (61) is disposed below a seat, the rear structure of the straddle-type vehicle (1) comprising:
a lighting device (31) configured to illuminate a vehicle rear side, behind the fuel tank (35) or the battery (61); and
a concave housing (41) surrounding a filler port (37) of the fuel tank (35) or a charging port (63) of the battery (61),
**characterized by**
the lighting device (31) is positioned at least one of above the concave housing (41) and on a side of the concave housing (41),
wherein the lighting device (31) is formed in a concave shape, in a rear view of the straddle-type vehicle,
the concave housing (41) except for a lower part is surrounded by the lighting unit (31), and
in a side view of the straddle-type vehicle,
at least a part of the lighting device (31) overlaps the concave housing (41).

2. The rear structure of the straddle-type vehicle (1) according to claim 1,
wherein an optional part is positioned above the lighting device (31).

3. The rear structure of the straddle-type vehicle (1) according to claim 1 or 2,
wherein the filler port (37) of the fuel tank (35) or the charging port (63) of the battery (61) is directed obliquely upward to the rear.

4. The rear structure of the straddle-type vehicle (1) according to claim 1 or 2,
wherein the lighting device (31) is a pair of lighting devices (71) separated in a vehicle width direction, and
the concave housing (41) is positioned between the pair of lighting devices (71).

5. The rear structure of the straddle-type vehicle (1) according to claim 1 or 2, further comprising:
an opening and closing cover (42) configured to be opened and closed to uncover and cover the filler port (37) of the fuel tank (35) or the charging port (63) of the battery (61),
wherein the opening and closing cover (42) is configured to be opened and closed rearward, and
in a side view, the opening and closing cover (42) is disposed on a vehicle front side of the lighting device (31).

6. The rear structure of the straddle-type vehicle (1) according to claim 1,
wherein an upper half portion of the lighting device (31), which is long in a vehicle width direction, is a brake lamp (32),
lower half portions of the lighting device (31), which are separated in the vehicle width direction, are a pair of left and right turn signal lamps (33),
the brake lamp (32) is positioned above the concave housing (41), and
the turn signal lamps (33) are positioned on sides of the concave housing (41).

## Patentansprüche

1. Hintere Struktur eines Grätschsitzfahrzeugs (1), in der ein Kraftstofftank (35) oder eine Batterie (61) unterhalb eines Sitzplatzes angeordnet ist, wobei die hintere Struktur des Grätschsitzfahrzeugs (1) Folgendes umfasst:
eine Beleuchtungsvorrichtung (31), die dazu konfiguriert ist, eine hintere Fahrzeugseite hinter dem Kraftstofftank (35) oder der Batterie (61) zu beleuchten; und
ein konkaves Gehäuse (41), das einen Einfüllanschluss (37) des Kraftstofftanks (35) oder einen Ladeanschluss (63) der Batterie (61) umgibt,
**dadurch gekennzeichnet, dass**
die Beleuchtungsvorrichtung (31) mindestens eines von oberhalb des konkaven Gehäuses (41) und an einer Seite des konkaven Gehäuses (41) positioniert ist,
wobei die Beleuchtungsvorrichtung (31) in einer hinteren Ansicht des Grätschsitzfahrzeugs in einer konkaven Form ausgebildet ist, das konkave Gehäuse (41) bis auf einen unteren Teil durch die Beleuchtungsvorrichtung (31) umgeben ist und
in einer Seitansicht des Grätschsitzfahrzeugs mindestens ein Teil der Beleuchtungsvorrichtung (31) das konkave Gehäuse (41) überlappt.

2. Hintere Struktur des Grätschsitzfahrzeugs (1) nach Anspruch 1,
wobei ein optionales Teil oberhalb der Beleuchtungsvorrichtung (31) angeordnet ist.

3. Hintere Struktur des Grätschsitzfahrzeugs (1) nach Anspruch 1 oder 2,
wobei der Einfüllanschluss (37) des Kraftstofftanks (35) oder der Ladeanschluss (63) der Batterie (61) schräg nach oben nach hinten gerichtet ist.

4. Hintere Struktur des Grätschsitzfahrzeugs (1) nach Anspruch 1 oder 2,
wobei die Beleuchtungsvorrichtung (31) ein Paar aus Beleuchtungsvorrichtungen (71) ist, die in einer Fahrzeugbreitenrichtung getrennten sind, und
das konkave Gehäuse (41) zwischen dem Paar aus Beleuchtungsvorrichtungen (71) positioniert ist.

5. Hintere Struktur des Grätschsitzfahrzeugs (1) nach Anspruch 1 oder 2, ferner Folgendes umfassend:
eine Öffnungs- und Schließabdeckung (42), die dazu konfiguriert ist, geöffnet und geschlossen zu werden, um den Einfüllanschluss (37) des Kraftstofftanks (35) oder den Ladeanschluss (63) der Batterie (61) freizulegen und abzudecken,
wobei die Öffnungs- und Schließabdeckung (42) dazu konfiguriert ist, nach hinten geöffnet und geschlossen zu werden, und
die Öffnungs- und Schließabdeckung (42) in einer Seitenansicht an einer Fahrzeugfrontseite der Beleuchtungsvorrichtung (31) angeordnet ist.

6. Hintere Struktur des Grätschsitzfahrzeugs (1) nach Anspruch 1,
wobei ein Abschnitt der oberen Hälfte der Beleuchtungsvorrichtung (31), der in einer Fahrzeugbreitenrichtung lang ist, eine Bremsleuchte (32) ist, Abschnitte der unteren Hälfte der Beleuchtungsvorrichtung (31), die in der Fahrzeugbreitenrichtung getrennt sind, ein Paar aus linken und rechten Blinkerleuchten (33) sind,
de Bremsleuchte (32) oberhalb des konkaven Gehäuses (41) positioniert ist und
die Blinkerleuchten (33) an Seiten des konkaven Gehäuses (41) positioniert sind.

## Revendications

1. Structure arrière d'un véhicule de type à enfourcher (1) dans laquelle un réservoir de carburant (35) ou une batterie (61) est disposé(e) sous un siège, la structure arrière du véhicule de type à enfourcher (1) comprenant :
un dispositif d'éclairage (31) configuré pour éclairer un côté arrière de véhicule, derrière le réservoir de carburant (35) ou la batterie (61) ; et
un logement concave (41) entourant un orifice de remplissage (37) du réservoir de carburant (35) ou un orifice de charge (63) de la batterie (61),
**caractérisée par**
le dispositif d'éclairage (31) est positionné au moins l'un de au-dessus du logement concave (41) et sur un côté du logement concave (41),
dans laquelle le dispositif d'éclairage (31) est formé dans une forme concave, dans une vue arrière du véhicule de type à enfourcher,
le logement concave (41), à l'exception d'un partie inférieure, est entouré par le dispositif d'éclairage (31), et
dans une vue latérale du véhicule de type à enfourcher, au moins une partie du dispositif d'éclairage (31) chevauche le logement concave (41).

2. Structure arrière du véhicule de type à enfourcher (1) selon la revendication 1,
dans laquelle une pièce optionnelle est positionnée au-dessus du dispositif d'éclairage (31).

3. Structure arrière du véhicule de type à enfourcher (1) selon la revendication 1 ou 2,
dans laquelle l'orifice de remplissage (37) du réservoir de carburant (35) ou l'orifice de charge (63) de la batterie (61) est dirigé obliquement vers le haut vers l'arrière.

4. Structure arrière du véhicule de type à enfourcher (1) selon la revendication 1 ou 2,
dans laquelle le dispositif d'éclairage (31) est une paire de dispositifs d'éclairage (71) séparés dans un sens de la largeur du véhicule, et
le logement concave (41) est positionné entre la paire de dispositifs d'éclairage (71).

5. Structure arrière du véhicule de type à enfourcher (1) selon la revendication 1 ou 2, comprenant en outre :
un couvercle d'ouverture et de fermeture (42) configuré pour être ouvert et fermé pour découvrir et couvrir l'orifice de remplissage (37) du réservoir de carburant (35) ou l'orifice de charge (63) de la batterie (61),
dans laquelle le couvercle d'ouverture et de fermeture (42) est configuré pour s'ouvrir et se fermer vers l'arrière, et
dans une vue latérale, le couvercle d'ouverture et de fermeture (42) est disposé sur un côté avant de véhicule du dispositif d'éclairage (31).

6. Structure arrière du véhicule de type à enfourcher (1) selon la revendication 1,
dans laquelle une partie de moitié supérieure du dispositif d'éclairage (31), qui est longue dans un sens de la largeur du véhicule, est un feu stop (32),
des parties de moitié inférieures du dispositif d'éclairage (31), qui sont séparées dans le sens de la largeur du véhicule, sont une paire de feux clignotants gauche et droite (33),
le feu stop (32) est positionné au-dessus du logement concave (41), et
les feux clignotants (33) sont positionnés sur des côtés du logement concave (41).
